(19) Europäisches Patentamt
European Patent Office
Office européen des brevets

(11) **EP 1 146 237 A1**

(12) **EUROPÄISCHE PATENTANMELDUNG**

(43) Veröffentlichungstag:
**17.10.2001 Patentblatt 2001/42**

(51) Int Cl.⁷: **F16B 33/02**

(21) Anmeldenummer: **00107884.9**

(22) Anmeldetag: **12.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **SIEMENS AKTIENGESELLSCHAFT**
**80333 München (DE)**

(72) Erfinder: **Haje, Detlef, Dr.-Ing.**
**46236 Bottrop (DE)**

(54) **Verfahren zur Ermittlung einer optimierten Gewindegestaltung**

(57) Die vorliegende Erfindung betrifft ein Verfahren zur Ermittlung einer optimierten Gestaltung eines Gewindes (10). Erfindungsgemäß wird aus den Belastungen des Anwendungsfalls die auftretende Verformung bestimmt und mit einer Korrekturfunktion ($S_{korr}$) der vorgegebenen Gewindegestaltung überlagert. Im Anwendungsfall auftretende Verformungen eines oder beider Verschraubungspartner (11, 12) werden gezielt vorweggenommen.

FIG 12A

**Beschreibung**

Die vorliegende Erfindung betrifft ein Verfahren zur Ermittlung einer optimierten Gestaltung eines Gewindes mit zwei Verschraubungspartnern zur anwendungsbezogenen Optimierung der Tragfähigkeit.

Gewinde und Verschraubungen mit zwei Verschraubungspartnern sind seit langer Zeit bekannt. Im allgemeinen ist einer der Verschraubungspartner eine von der Grundform her zylindrische Schraube, die in einen Flansch oder eine Mutter als zweitem Verschraubungspartner eingedreht wird. Die Steifigkeit des Flansches oder der Mutter ist im allgemeinen größer als die Steifigkeit der Schraube. Im Anwendungsfall dehnt sich die im allgemeinen auf Zug belastete Schraube stärker als der Flansch. Daher werden die ersten Gewindegänge, insbesondere der erste Gewindegang der Schraube, stärker belastet als die weiteren Gewindegänge. Eine Übersicht zu Gewinden und Schraubverbindungen wird beispielsweise in dem "Schraubenvademecum" von Illgner, K.H.; Blume, D., 1976, Fa. Bauer & Schaurte Karcher, Neuss, Deutschland, insbesondere Abschnitt 3.5 gegeben. Auch der "Dubbel", Taschenbuch für den Maschinenbau, W.Beitz, K,-H. Küttner, Springer Verlag, 1986 und der "Niemann", Maschinenelemente, Band 1: Konstruktion und Berechnungen von Verbindungen, Lagern, Wellen, Springer Verlag, enthalten umfangreiche Ausführungen zu Gewinden und der Tragfähigkeit und Belastung der einzelnen Gewindegänge.

Zur Verbesserung der Verteilung der Belastungen im Anwendungsfall wird in der Literatur eine Änderung der Steifigkeit des Flansches oder der Mutter vorgeschlagen. Hierdurch können die ersten Gewindegänge entlastet werden. Allerdings sind die erforderlichen Maßnahmen konstruktiv aufwendig und im Einzelfall unter Umständen nicht zu realisieren.

Aufgabe der vorliegenden Erfindung ist es daher, ein Verfahren bereitzustellen, mit dem eine im wesentlichen gleichmäßige Lastverteilung entlang der Längsachse des Gewindes ohne aufwendige Maßnahmen zu Verringerung der Steifigkeit erreicht wird. Weiter soll die mathematische Ermittlung einer für den jeweiligen Anwendungsfall optimalen Gestaltung eines Gewindes ohne aufwendige, auf den jeweiligen Anwendungsfall abgestimmte Versuche ermöglicht werden.

Erfindungsgemäß wird diese Aufgabe durch folgende Verfahrensschritte gelöst:

a) Vorgeben einer Gestaltung der Verschraubungspartner des Gewindes im Ausgangszustand,
b) Ermittlung der im Anwendungsfall auftretenden Belastungen,
c) Bestimmung der unter den Belastungen des Anwendungsfall auftretenden Verformung eines oder beider Verschraubungspartner, und
d) Ermitteln einer für den Anwendungsfall optimierten Gestaltung des Gewindes unter Berücksichtigung der auftretenden Verformung eines oder beider Verschraubungspartner.

Hierbei wird eine Gestaltung des Gewindes im Ausgangszustand als Ausgangspunkt vorgegeben, beispielsweise ein Normgewinde gemäß ISO oder DIN. Im unverspannten Zustand liegt die Schraube ohne Vorspannung und ohne Betriebslasten vor. Im Vorspannungszustand ist die Schraube in die zugehörige Mutter eingedreht und vorgespannt, wobei noch keine Betriebslasten vorliegen. Als Betriebszustand wird der tatsächliche Einsatz verstanden, beispielsweise bei der Verbindung von zwei druckbeanspruchten Gehäuseteilen. Bei diesem Betriebszustand liegen im Betriebszustand mechanische und thermische Belastungen vor, die zu einer Dehnung der Schraube in Längsrichtung führen. Unter dem Anwendungsfall wird der Vorspannungs- und/oder Betriebszustand verstanden.

Die Dehnung der Schrauben in Längsrichtung führt zu einer als Querkontraktion bezeichneten Verringerung des Querschnitts und damit des Durchmessers.

Basierend auf den im Anwendungsfall auftretenden Belastungen wird eine optimierte Gestaltung vorgegeben. Die vorgegebene Gewindegestaltung wird dabei derart verändert, daß die durch die Belastungen des Anwendungsfalles verursachten Verformungen im voraus korrigiert werden. Dies wird auch als Verformungsvorwegnahme bezeichnet.

Die Erfindung geht von einer vorgegebenen Gestaltung des Gewindes und damit der Verschraubungspartner aus. Es sind daher keine umfangreichen konstruktiven Änderungen erforderlich. Vielmehr wird die nach dem Fachmann bekannten Kriterien, wie z.B. Dauerfestigkeit unter Belastung, die ausgewählte Schraubverbindung optimiert. Es ergibt sich somit eine wesentlich erhöhte Lebensdauer und/oder Tragfähigkeit des Gewindes und damit der Schraubverbindung. Belastungsspitzen im Bereich der ersten Gewindegänge werden eliminiert. Alternativ können zuerst die im Betriebszustand auftretenden Belastungen ermittelt und dann eine Gestaltung der Verschraubungspartner vorgegeben werden. Die Optimierung erfolgt für den Vorspannungszustand, für den Betriebszustand oder für beide Zustände.

Vorteilhafte Ausgestaltungen und Weiterbildungen der Erfindung gehen aus den abhängigen Ansprüchen hervor.

In vorteilhafter Ausgestaltung erfolgen zum Ermitteln der optimierten Gestaltung folgende Schritte:

d1) Definieren einer Korrekturfunktion ($s_{korr}$), die die im Betriebszustand auftretende Verformung der Verschraubungspartner (11, 12) darstellt, und

d2) Überlagern der vorgegebenen Gestaltung des Gewindes (10) mit der Korrekturfunktion ($S_{korr}$) zur Erzielung einer für den Betriebszustand optimierten Gestaltung.

Vorteilhaft werden die im Anwendungsfall auftretenden mechanischen Belastungen berücksichtigt. Insbesondere beim Einsatz in Turbomaschinen auftretende Druckkräfte können zuverlässig bei der Auslegung des Gewindes berücksichtigt werden. Dies trifft insbesondere dann zu, wenn der Flansch eine andere Steifigkeit als die Schraube aufweist und sich daher die Schraube unter den Belastungen des Anwendungsfalles vergleichsweise stark verformt.

In vorteilhafter Ausgestaltung werden die im Betriebszustand auftretenden thermischen Belastungen berücksichtigt. Neben den mechanischen Belastungen aufgrund der Druckkraft und der Vorspannung treten in Turbomaschinen wie Dampf- oder Gasturbinen auch erhebliche thermische Belastungen aufgrund der Temperaturerhöhung auf. Die thermischen Ausdehnungskoeffizienten der beiden Verschraubungspartner Schraube und Flansch sind in einigen technisch relevanten Fällen unterschiedlich und können gemäß dem Verfahren bei der Gestaltung des Gewindes berücksichtigt werden.

Die Optimierung kann prinzipiell auf alle physikalischen Effekte angewendet werden, die eine ungünstige Lastverteilung/Beanspruchungsverteilung im Gewinde oder ein ungünstiges Verformungsverhalten bewirken können. Denkbar sind beispielsweise neben den oben genannten mechanischen und/oder thermischen Belastungen auch plastische Verformungen, Kriechverformungen, Aufzunderungen, Materialverlust durch Abtrag, Anisotropie, Aufquellen oder Schrumpfen der verwendeten Werkstoffe. Auch Mutternverformungen (Stauchung, Aufstülpen oder ähnliches) können innerhalb gewisser Grenzen ausgeglichen werden.

Gemäß einer vorteilhaften Weiterbildung wird eine im Anwendungsfall auftretende Querschnittsänderung zumindest eines der Verschraubungspartner berücksichtigt. Die Schraube erfährt im allgemeinen aufgrund ihrer Dehnung in Längsrichtung eine Verringerung des Durchmessers, während der Durchmesser des Mutterngewindes fast unverändert bleibt. Die im Anwendungsfall zu erwartende Änderung des Durchmessers wird vorab bestimmt und bei der Gestaltung des Gewindes berücksichtigt.

In vorteilhafter Ausgestaltung werden mindestens zwei Tragbereiche vorgesehen. Vorteilhaft wird ein erster Tragbereich für den Einbaufall oder Vorspannungszustand der Verschraubungspartner des Gewindes vorgesehen, während ein zweiter Tragbereich für den Betriebszustand der Verschraubungspartner des Gewindes vorgesehen wird. Die beiden unterschiedlichen Tragbereiche erlauben die gewünschte Fixierung der beiden Verschraubungspartner gegeneinander sowohl im Vorspannungszustand als auch im Betriebszustand. Im Vorspannungszustand ist im wesentlichen nur der erste Tragbereich im Eingriff. Hierbei treten bei Turbomaschinen nur vergleichsweise geringe Belastungen auf, die im Regelfall bei vergleichsweise niedrigen Temperaturen vorliegen. Die Verschraubungspartner des Gewindes können daher höher belastet werden. Im Betriebszustand bei höherer Temperatur kommt der zweite Tragbereich in Eingriff, so daß der erste Tragbereich entlastet wird.

Vorteilhaft wird der Übergang zwischen den beiden Tragbereichen derart definiert, daß die Korrekturfunktion an diesem Übergang stetig ist. In vorteilhafter Weiterbildung erfolgt die Definition derart, daß die die Korrekturfunktion an diesem Übergang differenzierbar ist. Mit einer derartigen Ausgestaltung der Korrekturfunktion läßt sich ein gleichmäßiger Verlauf der Belastung erreichen, und es werden lokale Spannungsspitzen am Übergang vermieden.

Gemäß einer vorteilhaften Ausgestaltung wird zwischen den beiden Tragbereichen ein Übergangsbereich definiert, der Tragaufgaben für beide Tragbereiche wahrnimmt. Hierdurch wird auch bei kleiner Baugröße ein günstiges Verhalten bei Zuständen zwischen dem Vorspannungszustand und dem Betriebszustand erreicht.

In erster vorteilhafter Ausgestaltung wird die Optimierung der Tragfähigkeit im Anwendungsfall durch eine Veränderung des Teilungsdurchmessers eines oder beider Verschraubungspartner entlang der Gewindeachse erreicht. Alternativ oder zusätzlich kann die Form der Zähne des Gewindes eines oder beider Verschraubungspartner verändert werden. Zur Optimierung kann weiter die Teilung des Gewindes eines oder beider Verschraubungspartner verändert werden. In Abhängigkeit von der vorgegebenen Gestaltung des Gewindes und den Belastungen im Anwendungsfall werden eine oder mehrere der genannten Optimierungen eingesetzt.

Vorteilhaft wird die im Anwendungsfall auftretenden Verformung eines Verschraubungspartners, insbesondere die eines Schraubenbolzens, berücksichtigt und die Verformung des anderen Verschraubungspartners, insbesondere die eines Flansches oder einer Mutter, vernachlässigt. Dieses Vorgehen vereinfacht die Berechnung der Korrekturfunktion erheblich. Da die Steifigkeit des Flansches im allgemeinen erheblich größer ist als die des Schraubenbolzens, ist der auftretende Fehler tolerierbar.

Die Auslegung der Gewindekorrektur, beispielsweise durch mathematische Methoden, durch numerische Berechnungen oder auf experimentelle Weise, erfolgt in der Regel mit dem Ziel einer gleichmäßigen Ausnutzung des jeweiligen Tragbereiches. Als Beispiele seien hier genannt:

- Auslegung auf konstante Flankenlast über die gesamte Länge eines Tragbereiches,
- Auslegung auf konstante oder nahezu konstante Ausnutzung von Spannungsgrenzen in den Bauteilen (Vergleichsspannungen im Bolzen),

- Auslegung auf konstante Flankenlast zum Schutz eines ggf. geringerfesten Mutternwerkstoffes vor Überbeanspruchung (Einschraubtiefe in Grauguß, Sphäroguß oder Nichteisenmetalle kann gegebenenfalls auf diese Art reduziert werden),

- Auslegung zur günstigen Beeinflussung einer Muttern- oder Flanschverformung,

- Auslegung als Reparaturlösung, bei der ein gemäß dem Verfahren gestalteter neuer Schraubenbolzen in ein Mutterngewinde eingesetzt wird, dessen erste Gewindegänge durch eine nicht optimierte Schraubverbindung beschädigt wurden (Ausbohren der beschädigten Gänge, Paarung des verbleibenden Mutterngewindes mit einem tragfähigkeitsoptimierten Bolzengewinde).

Es besteht weiter, sofern dies nicht in der Korrekturfunktion bereits berücksichtigt ist, die Möglichkeit, die auslegungsgemäße Gewindeform mit einer Zusatzfunktion zu überlagern. Diese Zusatzfunktion kann beispielsweise die besondere Entlastungen einzelner Bereiche / Zähne bewirken, insbesondere im Bereich der ersten Gewindezähne. Dies kann als Übergangsbereich zum freien Bolzen angesehen werden.

Die Tragfähigkeits-Optimierungen sind anwendungsspezifisch vorzunehmen. Prinzipiell ist die Korrektur besonders für Anwendungsfälle geeignet, bei denen der Anwendungsfall der Schraube eindeutig zuzuordnen ist, wie bei

- Einzel- oder Kleinserienfertigung der Schrauben im Turbomaschinenbau, wobei die Anwendungsrandbedingungen von Einbauort zu Einbauort variieren, oder

- Anwendung in einer Großserie mit immer gleichen Anwendungsbedingungen (zum Beispiel Zylinderkopfschrauben im Automobilbau).

Es ist jedoch auch denkbar, eine Korrekturfunktion für eine allgemeine Anwendung zu bestimmen, das heißt für eine Anwendung unter rein elastischer oder elastischer und plastischer Beanspruchung und diese Korrekturfunktion auf unterschiedliche Gewinde anzuwenden.

Die Vornahme der Korrektur bietet gegebenenfalls die Möglichkeit, die Schraubverbindung höher zu belasten, Betriebssicherheitsreserven zu vergrößern und bei Dehnschrauben einen größeren Schaftquerschnitt und damit eine bessere Tragfähigkeit zu erreichen sowie weitere Vorteile. Bei gleichem oder nahezu gleichem Platzbedarf ist also die Übertragung größerer Kräfte als bei konventionellen Verschraubungen möglich. Dies besitzt insbesondere im thermischen Turbomaschinenbau eine große Bedeutung, wo - bei gleichzeitigem Platzmangel - aufgrund großer Drücke und Temperaturen hohe Anforderungen an Schraubenverbindungen gestellt werden. Anhand der weiter unten beschriebenen Berechnungen erscheint bei gleichbleibender Gewindegröße eine Vergrößerung der Bolzenkraft um den Faktor 1,5 bis 2 realisierbar.

Die Erfindung ermöglicht eine Auslegung der Gewindebelastung in den kritischen Beanspruchungsfällen (Anwendungszustand) derart, daß durch ein gleichmäßiges Tragverhalten die Flankenlast auf etwa ein Drittel des maximalen Wertes eines unmodifizierten Gewindes reduziert wird. Weiterhin ist es möglich, daß für den Vorspannungszustand maximale Flankenlasten von circa der Hälfte der Werte für unkorrigiertes Gewinde erreicht wird. Das Verhältnis Flankenlast bei korrigiertem/unkorrigiertem Gewinde wird bei Einwirkung ungünstig gerichteter thermischer Differenzdehnungen noch höher. Dort weist das unkorrigierte Gewinde eine etwa fünffach höhere Flankenlast als das anwendungsoptimierte Gewinde auf. Durch geeignete Gestaltung (Übergangsbereich, stetiger Übergang zwischen Tragbereichen) ist es schließlich möglich, daß sich für Zwischenzustände (Temperaturen zwischen Vorspannzustand und Betriebszustand) keine besonders erhöhten Flankenlasten gegenüber den Auslegungszuständen ergeben.

Bei Auslegung auf konstante und/oder reduzierte Beanspruchung, beispielsweise konstante Vergleichsspannung im Bolzengewindegrund, kann für den Betriebszustand unter thermischer Differenzdehnung eine deutliche Verringerung gegenüber unkorrigierten Gewinden auf beispielsweise 30% erreicht werden. Im Vorspannungszustand kann eine Reduktion auf beispielsweise 40% erreicht werden. Die genannten Flankenkraftreduktionen/Spannungsreduktionen sind abhängig vom Einzelfall und insbesondere von der erlaubten Einschraubtiefe. Basis der Angaben ist eine um 20% höhere Einschraubtiefe als bei bisherigen Standardverschraubungen. Diese Vergrößerung der Einschraubtiefe ist jedoch frei gewählt und ist keine Voraussetzung für die Optimierung.

Die Korrektur ermöglicht den sinnvollen Einsatz längerer Gewinde als bisher; die letzten Zähne tragen nämlich anders als bei korrigiertem Gewinde bei unkorrigiertem Gewinde kaum noch. Ebenso können durch Vergleichmäßigung der Flankenkräfte kürzere Einschraubtiefen insbesondere bei niedrigfesten Mutternwerkstoffen erreicht werden.

Die Fertigung eines derart korrigierten Gewindes bedeutet weder für die Einzelfertigung (CNC-gesteuerte Maschinen zum Gewindeschneiden) noch für die Großserienfertigung (Gewindewalzen mit einem die Korrekturfunktion abbildenden Werkzeug) eine wesentliche Aufwandserhöhung. Es besteht die Möglichkeit, die gefundene Gewindeform durch im Einzelfall fertigungstechnisch vorteilhaftere Formen, wie durch eine Reihe von Abschnitten mit einer Kegelkorrektur, abzubilden beziehungsweise anzunähern.

Nachstehend wird die Erfindung anhand von Ausführungsbeispielen näher beschrieben, die in schematischer Weise in der Zeichnung dargestellt sind. Für gleiche oder funktionsidentische Bauteile werden durchgehend dieselben Bezugszeichen verwendet. Dabei zeigt:

Figur 1                      ein Flußdiagramm des erfindungsgemäßen Verfahrens,
Figur 2                      ein mechanisches Ersatzmodell eines Schraubenbolzens,
Figur 3                      eine Prinzipdarstellung eines Gewindes mit Gewindekorrektur,
Figur 4                      eine vergrößerte Darstellung der Einzelheit X aus Figur 3,
Figur 5                      eine vergrößerte Darstellung der Einzelheit Y aus Figur 3,
Figur 6                      den Zusammenhang zwischen axialem und radialem Spiel,
Figur 7 bis 10               verschiedene Varianten des Übergangs zwischen zwei Tragbereichen,
Figur 11A bis 14A            einen Ausschnitt aus einem Gewinde im Einbauzustand,
Figur 11B bis 14B            einen Ausschnitt aus einem Gewinde im Anwendungsfall,
Figur 15                     den Verlauf der Flankenkraft für erfindungsgemäße Gewindegestaltungen ohne thermische Dehnungen
Figur 16                     den Verlauf der Vergleichsspannungen bei den Gewindegestaltungen gemäß Figur 15, und
Figur 17                     verschiedene Verläufe der Flankenkraft für unterschiedliche Betriebszustände bei Gewindegestaltung für Anwendungen bei erhöhter Temperatur.

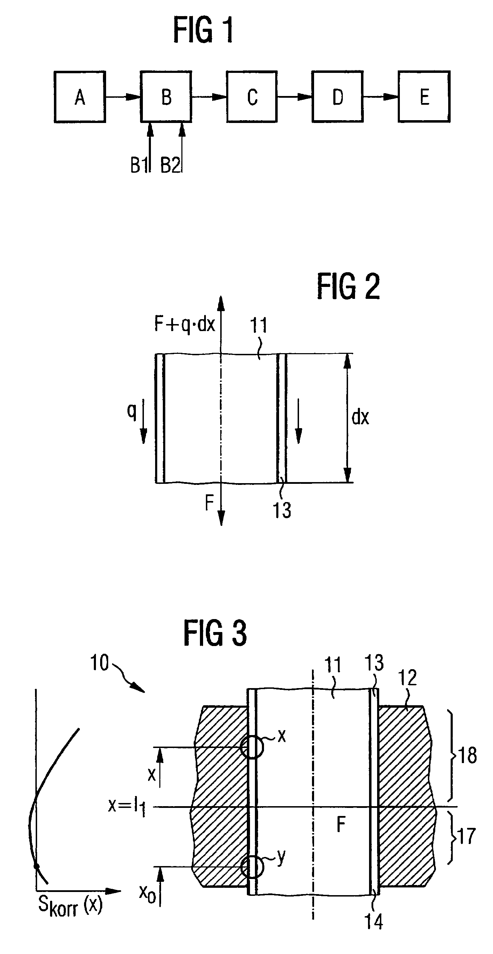

Figur 1 zeigt ein Flußdiagramm gemäß dem erfindungsgemäßen Verfahren. Zunächst wird in Schritt A eine Gestaltung eines Gewindes vorgegeben. Anschließend werden in Schritt B die im Anwendungsfall auftretenden Belastungen ermittelt. Die Schritte A und B können auch vertauscht werden. Es werden insbesondere mechanische und/ oder thermische Belastungen, wie mit B1 und B2 angegeben, berücksichtigt. Aus der vorgegebenen Gestaltung des Gewindes und den Belastungen in Anwendungsfall wird in Schritt C die Verformung der Verschraubungspartner des Gewindes bestimmt. In Schritt D wird dann eine Korrekturfunktion definiert, die die im Anwendungsfall auftretende Verformung der Verschraubungspartner darstellt. Die vorgegebene Gestaltung des Gewindes wird anschließend in Schritt E mit der Korrekturfunktion zur Erzielung einer für den Anwendungsfall optimierten Gestaltung überlagert.

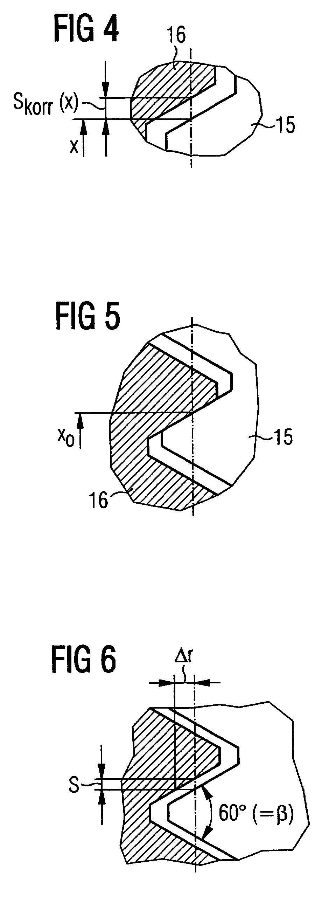

Die Figuren 2 bis 6 zeigen schematisch ein Gewinde 10 mit einem Schraubenbolzen 11 und einer Mutter 12 als Verschraubungspartnern. Der Schraubenbolzen 11 und die Mutter 12 sind jeweils mit einem Bolzengewinde 13 mit Zähnen 15 und einem Muttergewinde 14 mit Zähnen 16 versehen. Der Flankenwinkel $\beta$ der Zähne 15, 16 beträgt bei der vorgegebenen Gestaltung des Gewindes 10 60°.

Eine Änderung des Durchmessers von $\Delta d/2 = \Delta r$ führt zu einem Spiel s in Richtung x. Das Spiel s ergibt sich zu:

$$s = \Delta r \tan(\beta/2)$$

Für

$$\beta = 60° \text{ ergibt sich } \tan(\beta/2) = 0,5$$

und damit

$$s = \Delta r/2, \text{ beziehungsweise } s = \Delta d/4$$

Das Gewinde 10 weist zwei Tragbereiche 17, 18 auf, von denen einer für den Vorspannungszustand und der andere für den Betriebszustand unter Belastung optimiert ist. Zur Optimierung wird eine Korrekturfunktion $S_{korr}(x)$ bestimmt, die der vorgegebenen Gestaltung überlagert wird. Die Länge der Tragbereiche 17, 18 beträgt $l_1$ beziehungsweise $l_2$.

Die Korrekturfunktion $S_{korr}(x)$ wird beispielhaft wie folgt berechnet:

In diesem Beispiel wird nur das Verformungsverhalten des Schraubenbolzens 11 betrachtet. Die Mutter 12 mit dem Muttergewinde 14 wird als steif gegenüber dem Schraubenbolzen 11 angesehen (Ausführung z. B. als Einschraubloch in einem ausgedehnten Flansch). Die Steifigkeit der Gewindezähne 15, 16 geht nicht in die Berechnung ein, solange innerhalb des betrachteten Tragbereiches 17, 18 eine konstante Flankenbelastung vorliegt (Auslegungsvorgabe). Bei einer etwaigen Simulation des Verhaltens der gesamten Verschraubung sollte sie jedoch einfließen.

Isolierte Betrachtung der einzelnen Tragbereiche

Gleichmäßiges Tragverhalten: Linienlast q über der Länge des Tragbereiches 17, 18 soll möglichst konstant sein:

$$q = const.$$

Bei gegebener Tragbereichslänge $l_1$ und $l_2$ ergibt sich q aus der jeweiligen Schraubenkraft:
Vorspannungzustand:

$$q_1 = \frac{F_1}{l_1}$$

Betriebszustand:

$$q_2 = \frac{F_2}{l_2}$$

Es ergibt sich für die Bolzenkraft F(x) und die resultierende elastische Bolzendehnung $\varepsilon_x(x)$ innerhalb der Tragbereiche 17, 18 folgende Funktion (x ist hier bezogen auf den Beginn des Tragbereiches, d. h. den Ort, an dem die Kraftaufbringung beginnt, und läuft bis zum Ende des Tragbereiches, also bis zu dem Ort, wo die gesamte Kraft aufgebracht ist.):

$$F(x) = q \cdot x,$$

$$\varepsilon_x(x) = \frac{F}{A \cdot E} = \frac{q \cdot x}{A \cdot E} .$$

(Dabei ist A der Spannungsquerschnitt des Bolzengewindes 13 und E der Elastizitätsmodul des Schraubenmaterials. Plastische Verformung wird in diesem Beispiel nicht betrachtet.) Die durch elastische Bolzendehnung hervorgerufene axiale Verschiebung $s_{el}(x)$ an der Stelle x ergibt sich durch Integration zu

$$s_{el}(x) = \int_0^x \varepsilon_x(x) \cdot dx = \int_0^x \frac{q \cdot x}{A \cdot E} \cdot dx = \frac{q \cdot x^2}{2 \cdot A \cdot E} + C .$$

(Integrationskonstante C wird Null wegen $S_{el}(x=0) = 0$).
Die durch thermische Differenzdehnung bei erhöhter Temperatur hervorgerufene Verschiebung $s_{th}(x)$ an der Stelle x ist mit $\varepsilon_{th} = \Delta\alpha \cdot \Delta\vartheta$

$$s_{th}(x) = \int_0^x \varepsilon_{th}(x) \cdot dx = \int_0^x \Delta\alpha \cdot \Delta\vartheta \cdot dx = \Delta\alpha \cdot \Delta\vartheta \cdot x + C$$

(mit $\Delta\vartheta$ Temperaturdifferenz zwischen Vorspannungzustand und Betriebszustand, $\Delta\alpha$ Differenz der mittleren Ausdehnungskoeffizienten von Schraubenbolzen 11 und Mutter 12 zwischen Vorspannungszustand und betrachtetem Betriebszustand; C = 0, siehe oben).
Durch die Dehnung $\varepsilon_x(x)$ wird eine Querkontraktion $\varepsilon_r(x)$ bewirkt (μ - Querkontraktionszahl) : $\varepsilon_r(x) = -\mu \cdot \varepsilon_x(x)$. Diese Querkontraktion bewirkt eine radiale Rücknahme der Gewindezähne $\Delta r$ ($\Delta d = 2\Delta r$) und über den Flankenwinkel β auch eine axiale Rücknahme $s_\mu(x)$ :

$$\Delta d(x) = -\mu \cdot \varepsilon_x(x) \cdot d$$

(d - Durchmesser mit Querdehnungseinfluß, näherungsweise wird Flankendurchmesser angesetzt),

$$s_\mu(x) = \frac{\Delta d}{2} \cdot \tan\frac{\beta}{2}$$

Mit $\frac{\beta}{2} = 30°$ (Spitzgewinde nach ISO) wird $\tan\frac{\beta}{2} = 0,5$ . Somit:

$$s_\mu(x) = \frac{1}{4}\,\Delta d(x)$$

Es ergibt sich:

$$s_\mu(x) = -\frac{1}{4}\,\mu \cdot d \cdot \varepsilon_x(x) = -\mu \cdot d \cdot \frac{q \cdot x}{4 \cdot A \cdot E}\;.$$

($s_\mu(x)$ ist negativ, da entgegengesetzt zu $s_{el}$ und $s_{th}$ wirkend) Bei gleichmäßiger Linienlast q ergibt sich damit eine Verformung des Schraubenbolzens 11 von

$$s_{ges}(x) = s_{el}(x) + s_{th}(x) + s_\mu(x)$$

Die Verformungsvorwegnahme soll diese Verformung genau ausgleichen beziehungsweise vorwegnehmen. Die Korrekturfunktion wird daher entsprechend definiert:

$s_{korr}(x) = s_{ges}(x)$
$s_{korr}(x) = s_{el}(x) + s_{th}(x) + s_\mu(x)$
$s_{korr}(x) = \frac{q \cdot x^2}{2 \cdot A \cdot E} + \Delta\alpha \cdot \Delta\vartheta \cdot x - \mu \cdot d \cdot \frac{q \cdot x}{4 \cdot A \cdot E}$

Damit befinden sich die Mutternzähne 16 genau an dem Ort, wo sich die Bolzenzähne 15 durch die o. g. Mechanismen bei Auslegungskraft im Auslegungsbetriebszustand einstellen.
In diesem Beispiel soll eine Korrektur des Flankendurchmessers $\Delta d$ vorgenommen werden:

$$\Delta d(x) = 4 \cdot s_{korr}(x)$$

($\Delta d(x)$ ist die Flankendurchmesserdifferenz zwischen Beginn des Tragbereiches 17, 18 und dem Ort x). Allgemein gilt damit für einen Tragbereich die Korrektur des Flankendurchmessers:

$$\Delta d(x) = \frac{2 \cdot q \cdot x^2}{A \cdot E} + 4 \cdot \Delta\alpha \cdot \Delta\vartheta \cdot x - \mu \cdot d \cdot \frac{q \cdot x}{A \cdot E} + \Delta d_0$$

($\Delta d_0$ ist die Flankendurchmesserkorrektur an der Stelle x = 0, z. B. aus der Korrektur vorgelagerter Tragbereiche 17, 18).

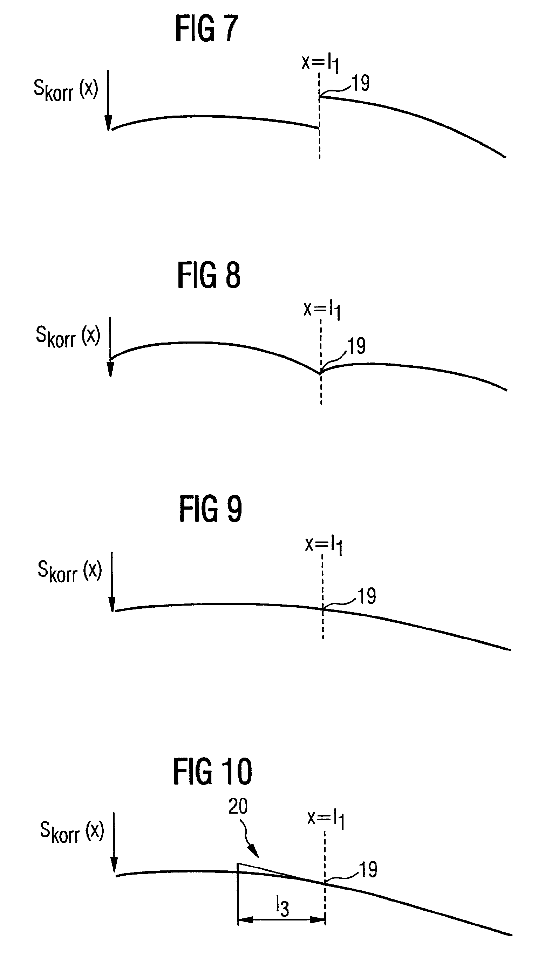

Die Figuren 7 bis 10 zeigen schematisch einen möglichen Verlauf der Korrekturfunktion $S_{korr}$ bei zwei Tragbereichen 17, 18. In Figur 7 ist die Korrekturfunktion $S_{korr}$ im Übergang 19 zwischen den Tragbereichen nicht stetig. Figur 8 zeigt eine stetige, aber nicht differenzierbare Korrekturfunktion $S_{korr}$. In Figur 9 ist eine stetige und differenzierbare Korrekturfunktion $S_{korr}$ dargestellt. Figur 10 zeigt die Verwendung eines Übergangsbereichs 20 zwischen den beiden Tragbereichen 17, 18.

Zusammenwirken der Tragbereiche

Sollen (wie im betrachteten Beispiel) zwei Tragbereiche 17, 18 kombiniert werden, so sind folgende Punkte zu beachten:

1. Die Korrekturfunktion $S_{korr}$ sollte am Übergang zwischen den Tragbereichen stetig sein (sie sollte also keinen Sprung besitzen), da eine Unstetigkeit / ein Sprung zu einer (ungewünschten) Höherbelastung einzelner Zähne führt.
2. Die Korrekturfunktion $S_{korr}$ sollte am Übergang zwischen den Tragbereichen differenzierbar sein (sie sollte also keinen "Knick" aufweisen), da dies zu einem ungünstigen Tragverhalten in Zuständen zwischen Vorspannungs- und Betriebszustand oder zu einem ungewollten Mittragen einzelner Zähne anderer Tragbereiche führen kann.
3. Vorteilhafterweise sollte die Korrekturfuktion $S_{korr}$ so beschaffen sein, daß einige Zähne am Übergang zwischen den Tragbereichen Tragaufgaben für beide Tragbereiche wahrnehmen. Dies gestattet im Vergleich zur Korrektur ohne diese Ausgestaltung eine vergleichsweise geringe Einschraubtiefe bei nur moderater Flankenkrafterhöhung.

Damit ergeben sich folgende mathematischen Zusammenhänge (mit x - Beginn des Gewindeeingriffes auf der kraftfreien Seite, $l_1$ - Länge des ersten Tragbereiches 17, $l_2$ - Länge des zweiten Tragbereiches 18, x = 0 ... $l_1 + l_2$) :

<u>Zu 1.</u> (die Korrekturfunktion soll stetig sein): Die Korrekturfunktion für den Tragbereich für den Vorspannungszustand (keine thermische Verformung) ist:

$$\Delta d(x) = \frac{2 \cdot q_1 \cdot x^2}{A \cdot E} - \mu \cdot d \cdot \frac{q_1 \cdot x}{A \cdot E} + \Delta d_0$$

$\Delta d_0$ wird dabei zu Null gesetzt, da am Beginn des Tragbereiches keine Gewindekorrektur vorgenommen wird. Es ergibt sich somit:

$$\Delta d(x) = \frac{q_1}{A \cdot E} \cdot \left( 2 \cdot x^2 - \mu \cdot d \cdot x \right)$$

Der Tragbereich 18 für den Betriebszustand unterliegt dann folgender Korrekturfunktion:

$$\Delta d(x) = \frac{2 \cdot q \cdot (x - l_1)^2}{A \cdot E} - \mu \cdot d \cdot \frac{q \cdot (x - l_1)}{A \cdot E} + 4 \cdot \Delta\alpha \cdot \Delta\vartheta \cdot (x - l_1) + \Delta d_0$$

Für $Dd_0$ gilt wegen Forderung nach Stetigkeit:

$$\Delta d_0 = \Delta d(x = l_1) = \frac{q_1}{A \cdot E} \cdot \left( 2 \cdot l_1^2 - \mu \cdot d \cdot l_1 \right)$$

mit

$$q_1 = \frac{F_1}{l_1} :$$

$$\Delta d_0 = \frac{F_1}{A \cdot E} \cdot \left( 2 \cdot l_1 - \mu \cdot d \right)$$

Somit gilt:

$$\Delta d(x) = \frac{2 \cdot q \cdot (x - l_1)^2}{A \cdot E} - \mu \cdot d \cdot \frac{q \cdot (x - l_1)}{A \cdot E} + 4 \cdot \Delta\alpha \cdot \Delta\vartheta \cdot (x - l_1) + \frac{F_1}{A \cdot E} \cdot \left( 2 \cdot l_1 - \mu \cdot d \right)$$

$$\Delta d(x) = (x - l_1) \cdot \left( \frac{q}{A \cdot E} \cdot \left( 2 \cdot (x - l_1) - \mu \cdot d \right) + 4 \cdot \Delta\alpha \cdot \Delta\vartheta \right) + \frac{F_1}{A \cdot E} \cdot \left( 2 \cdot l_1 - \mu \cdot d \right)$$

<u>Zu 2.</u> (die Korrekturfunktion soll differenzierbar sein): Die Korrekturfunktionen müssen am betrachteten Ort die gleiche Steigung besitzen (ihre Ableitungen müssen gleich sein).

Für den ersten Tragbereich 17 gilt:

$$\Delta d'(x) = \frac{q_1}{A \cdot E} \cdot \left(4 \cdot x - \mu \cdot d\right)$$

$$\Delta d'(x = l_1) = \frac{q_1}{A \cdot E} \cdot \left(4 \cdot l_1 - \mu \cdot d\right)$$

Für den zweiten Tragbereich 18 gilt:

$$\Delta d'(x) = \frac{4 \cdot q \cdot (x - l_1)}{A \cdot E} - \mu \cdot d \cdot \frac{q}{A \cdot E} + 4 \cdot \Delta\alpha \cdot \Delta\vartheta$$

$$\Delta d'(x) = \frac{q}{A \cdot E} \cdot \left(4 \cdot (x - l_1) - \mu \cdot d\right) + 4 \cdot \Delta\alpha \cdot \Delta\vartheta$$

$$\Delta d'(x = l_1) = 4 \cdot \Delta\alpha \cdot \Delta\vartheta - \frac{q \cdot \mu \cdot d}{A \cdot E}$$

Gleichsetzen der beiden Ableitungen für $x = l_1$ im Übergang 19 liefert nach Umformschritten:

$$q_1 - q_2 = \frac{4}{\mu \cdot d} \cdot \left(F_1 - A \cdot E \cdot \Delta\alpha \cdot \Delta\vartheta\right)$$

Daraus läßt sich z. B. bei Festlegung von $F_1$, $F_2$ und $l_2$ die erforderliche Länge $l_1$ des ersten Tragbereiches 17 bestimmen. Es ergibt sich allerdings, je nach Differenz der thermischen Ausdehnungskoeffizienten $\Delta\alpha$, teilweise ein sehr kurzer erster Tragbereich 17.

Zu 3. (es sollte ein Übergangsbereich 20 vorgesehen werden): Hierbei wird eine Anzahl von Gewindezähnen 15, 16 am Übergang zwischen den beiden Tragbereichen 17, 18 für Tragaufgaben beider Bereiche angesetzt. Dabei gilt:

- Die Überdeckungslänge $l_3$ wird als äquivalente mittragende Gewindelänge des ersten Tragbereiches 17 im Betriebszustand betrachtet.
- Die Bezugslängen $l_1$ und $l_2$ für die Linienlasten $q_1$ und $q_2$ bleiben gleich.
- Die Korrektur für den ersten Tragbereich 17 wird bis $x = l_1$ ausgeführt.
- Die Korrektur für den zweiten Tragbereich 18 beginnt bei $x = l_1$, allerdings so, als ob er schon über eine Länge von $l_3$ bestehen würde. An Stelle des Ausdrucks $(x - l_1)$ tritt in den Gleichungen $(x - l_1 + l_3)$.
- Die Gesamtlänge des Gewindeeingriffes ist $l_{ges} = l_1 + l_2 - l_3$.
- Es ist ein Korrekturglied C an der Stelle $x = l_3$ erforderlich, um dort die Stetigkeit der Korrekturfunktion zu gewährleisten.

Für den ersten Tragbereich 17 zur Vorspannungsaufnahme ($x = 0 \ldots l_1$) kommt die gleiche Korrektur wie unter 1. zum Tragen:

$$\Delta d(x) = \frac{q_1}{A \cdot E} \cdot \left(2 \cdot x^2 - \mu \cdot d \cdot x\right)$$

$$\Delta d(x = l_1) = \frac{q_1}{A \cdot E} \cdot \left(2 \cdot l_1^{\,2} - \mu \cdot d \cdot l_1\right)$$

$$\Delta d'(x) = \frac{q_1}{A \cdot E} \cdot \left(4 \cdot x - \mu \cdot d\right)$$

Für den Tragbereich 2 (Betriebszustand, $x = l_1 \ldots l_1 + l_2 - l_3$) gilt:

$$\Delta d(x) = (x - l_1 + l_3) \cdot \left(\frac{q_2}{A \cdot E} \cdot \left(2 \cdot (x - l_1 + l_3) - \mu \cdot d\right) + 4 \cdot \Delta\alpha \cdot \Delta\vartheta\right) + \frac{F_1}{A \cdot E} \cdot \left(2 \cdot l_1 - \mu \cdot d\right) - C$$

$$\Delta d(x = l_1) = l_3 \cdot \left(\frac{q_2}{A \cdot E} \cdot \left(2 \cdot l_3 - \mu \cdot d\right) + 4 \cdot \Delta\alpha \cdot \Delta\vartheta\right) + \frac{F_1}{A \cdot E} \cdot \left(2 \cdot l_1 - \mu \cdot d\right) - C$$

Bestimmung des Korrekturgliedes C durch Gleichsetzen der Gleichungen für den ersten und zweiten Tragbereich für die Stelle $x = l_1$:

$$\frac{F_1}{A \cdot E} \cdot \left(2 \cdot l_1 - \mu \cdot d\right) = l_3 \cdot \left(\frac{q_2}{A \cdot E} \cdot \left(2 \cdot l_3 - \mu \cdot d\right) + 4 \cdot \Delta\alpha \cdot \Delta\vartheta\right) + \frac{F_1}{A \cdot E} \cdot \left(2 \cdot l_1 - \mu \cdot d\right) - C$$

$$C = l_3 \cdot \left(\frac{q_2}{A \cdot E} \cdot \left(2 \cdot l_3 - \mu \cdot d\right) + 4 \cdot \Delta\alpha \cdot \Delta\vartheta\right)$$

Damit ergibt sich:

$$\Delta d(x) = (x - l_1 + l_3) \cdot \left(\frac{q_2}{A \cdot E} \cdot \left(2 \cdot (x - l_1 + l_3) - \mu \cdot d\right) + 4 \cdot \Delta\alpha \cdot \Delta\vartheta\right)$$

$$+ \frac{F_1}{A \cdot E} \cdot \left(2 \cdot l_1 - \mu \cdot d\right) - l_3 \cdot \left(\frac{q_2}{A \cdot E} \cdot \left(2 \cdot l_3 - \mu \cdot d\right) + 4 \cdot \Delta\alpha \cdot \Delta\vartheta\right)$$

Ableitung der Korrekturfunktion für Tragbereich 18:

$$\Delta d'(x) = \frac{q_2}{A \cdot E} \cdot \left(4 \cdot (x - l_1 + l_3) - \mu \cdot d\right) + 4 \cdot \Delta\alpha \cdot \Delta\vartheta$$

Für $x = l_1$:

$$\Delta d'(x = l_1) = \frac{q_2}{A \cdot E} \cdot \left(4 \cdot l_3 - \mu \cdot d\right) + 4 \cdot \Delta\alpha \cdot \Delta\vartheta$$

Ein tangentialer Übergang an der Stelle $x = l_1$ verlangt, daß die Ableitungen der beiden Korrekturfunktionen an dieser Stelle gleich sind:

$$\frac{q_1}{A \cdot E} \cdot \left(4 \cdot l_1 - \mu \cdot d\right) = \frac{q_2}{A \cdot E} \cdot \left(4 \cdot l_3 - \mu \cdot d\right) + 4 \cdot \Delta\alpha \cdot \Delta\vartheta$$

Nach Umformschritten ergibt sich eine Länge $l_1$ des ersten Tragbereiches 17, bei deren Einhaltung der differenzierbare Übergang zwischen erstem und zweitem Tragbereich 17, 18 gewährleistet ist:

$$I_1 = \frac{F_1 \cdot \mu \cdot d}{4 \cdot \left( q_2 \cdot \left( \frac{\mu \cdot d}{4} - I_3 \right) - \Delta\alpha \cdot \Delta\vartheta \cdot A \cdot E + F_1 \right)}$$

Somit ist die Gewindekorrektur für den vorliegenden Anwendungsfall vollständig bestimmt. Sie kann nun mit verschiedenen Verfahren überprüft / simuliert werden.

Simulation des Gewindeverhaltens

Eine Überprüfung der ermittelten Korrekturfunktion $s_{korr}$ und der hieraus bestimmten optimierten Gestaltung des Gewindes 10 kann auf verschiedene Arten geschehen, beispielsweise durch experimentelle Untersuchungen (DMS-Meßtechnik, Moiré-Technik, Spannungsoptik), numerische oder analytische Methoden.

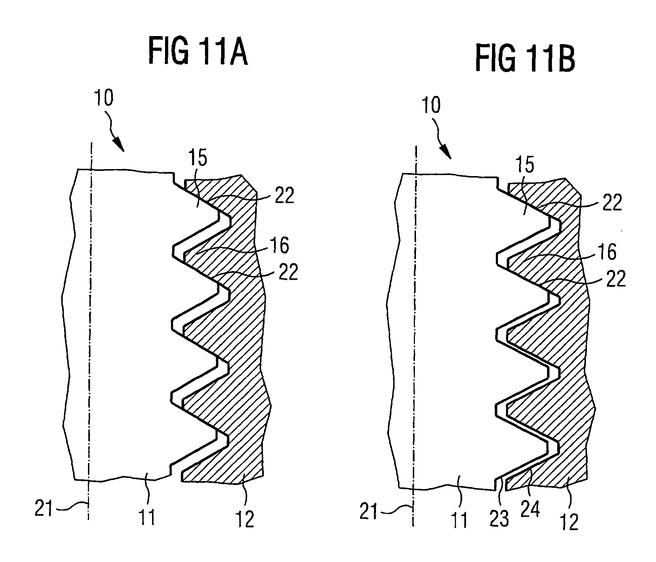

Die Figuren 11A bis 14A zeigen einen Ausschnitt aus einem Gewinde 10 mit einer Mittelachse 21 im Roh- oder Vorspannungszustand. In den Figuren 11B bis 14B ist jeweils derselbe Ausschnitt im Betriebszustand unter Belastung dargestellt.

Figur 11A und 11B zeigen ein konventionelles Gewinde 10. Im Vorspannungszustand berühren sich die Zähne 15, 16 im wesentlichen entlang der Gesamtlänge des Gewindes 10. Im Betriebszustand, insbesondere bei unterschiedlichen Wärmedehnungen von Schraubenbolzen 11 und Mutter 12, tritt allerdings eine Längenänderung des Schraubenbolzens 11 gegenüber der Mutter 12 auf. Lediglich in einem Anfangsbereich 22 berühren sich die Flanken 23, 24 der Zähne 15, 16. Beabstandet zu diesem Anfangsbereich 22 liegt zumindest eine Flankenentlastung und damit nur eine geringe oder keine Kraftübertragung mehr vor. Die Belastung der ersten Gewindegänge wird deutlich erhöht.

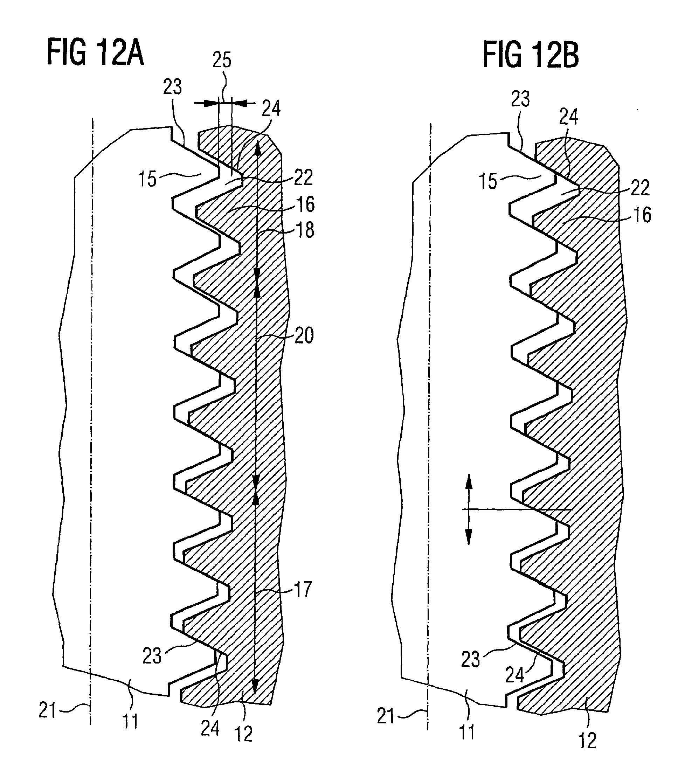

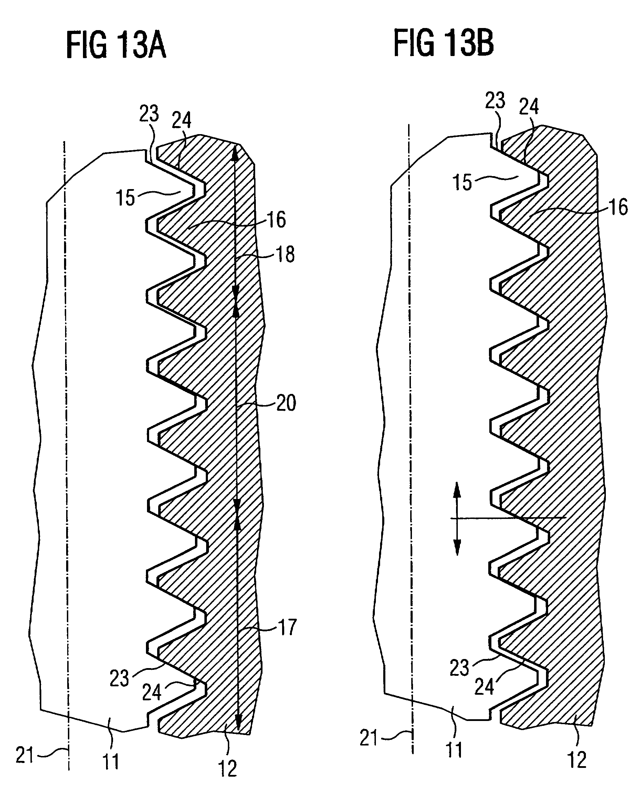

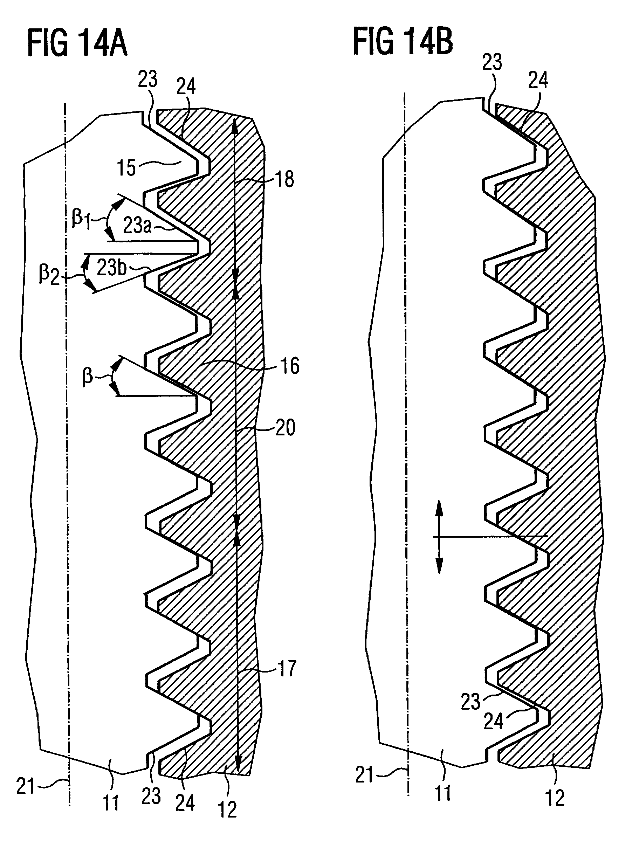

Gemäß dem Verfahren der Erfindung wird zur Optimierung der Gestaltung des Gewindes 10 aus Figur 11A, 11B das Bolzengewinde 13 verändert. Figur 12A und 12B zeigen eine Variation des Durchmessers, Figur 13A und 13B eine Variation der Teilung und Figur 14A und 14B eine Variation des Gewindeprofils beziehungsweise der Form der Zähne 15. Selbstverständlich können dieselben Maßnahmen alternativ oder ergänzend auch an dem Mutterngewinde 14 vorgenommen werden.

In Figur 12A und 12B ist der Schraubenbolzen 11 im ersten Tragbereich 17 auf den Vorspannungszustand und im zweiten Tragbereich 18 mit sich verringerndem Durchmesser auf den Betriebszustand optimiert ausgebildet. Zwischen den beiden Tragbereichen 17, 18 ist ein Übergangsbereich 20 angeordnet. Der Kegelwinkel 25 des Tragbereichs 18 wird entsprechend den Belastungen des Anwendungsfalls festgelegt, so daß dann eine Vielzahl von Zähnen 15, 16 miteinander im Eingriff sind.

Gemäß Figur 13A und 13B kann die Optimierung auch durch eine Änderung der Teilung des Bolzengewindes 13 erfolgen. Im Tragbereich 17 ist die Teilung hinsichtlich des Vorspannungszustands optimiert, während im Tragbereich 18 und im Übergangsbereich 20 eine entsprechend den Belastungen des Betriebszustands optimierte Teilung vorgesehen ist.

Figur 14A und 14B zeigen eine Variation des Gewindeprofils durch eine Änderungen des Flankenwinkels $\beta$ der Zähne 15 des Schraubenbolzens 11. Im Tragbereich 17 ist der Flankenwinkel hinsichtlich des Vorspannungszustands optimiert, während im Tragbereich 18 und im Übergangsbereich 20 andere, für den Betriebszustand optimierte Flankenwinkel realisiert werden. Es können auch für beide Flanken 23a, 23b eines Zahns 15 unterschiedliche Flankenwinkel $\beta_1$, $\beta_2$ gewählt werden. Im Betriebszustand ergibt sich ein gleichmäßiges Tragverhalten der optimierten Gewindegestaltung.

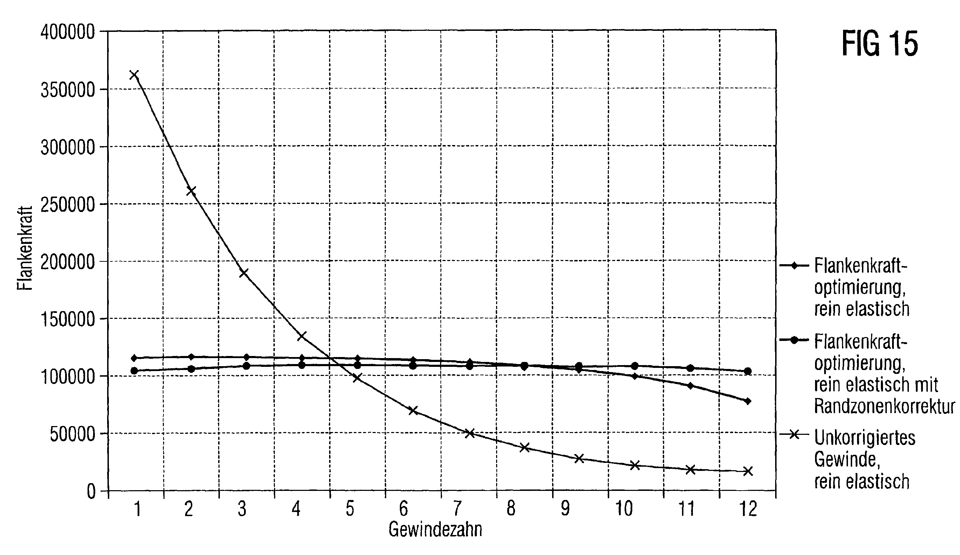

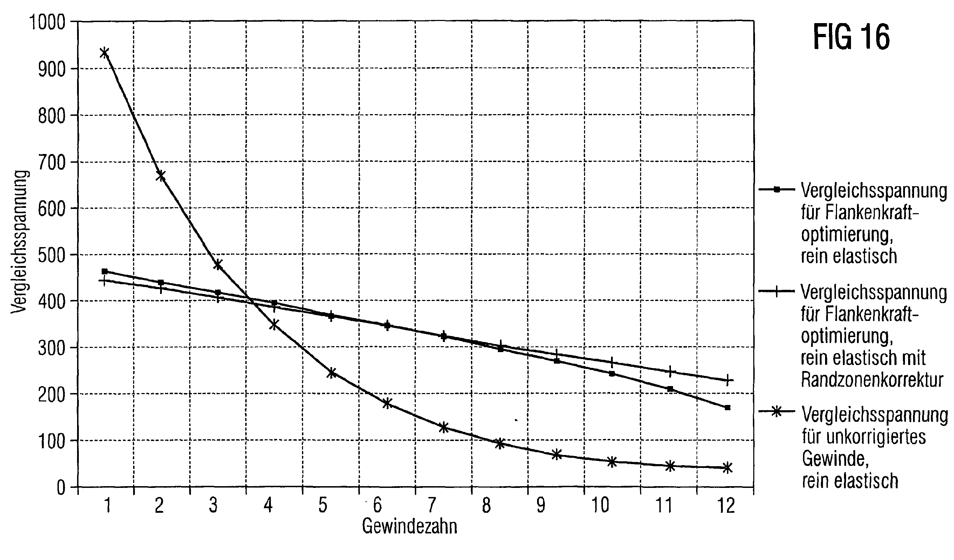

Die Figuren 15 und 16 zeigen beispielhaft die Verläufe von Flankenkraft und Vergleichsspannung für unterschiedliche Anwendungsfälle bei einer optimierten Gewindegestaltung gemäß der Erfindung und bei einer bekannten Gewindegestaltung. Thermische Belastungen wurden hier nicht berücksichtigt. Die bekannte Gewindegestaltung weist einen hohen Wert direkt am Anfang im Bereich des ersten Gewindezahns auf, der dann über die Länge des Schraubenbolzens 11 stark abfällt. Es ergibt sich eine sehr unregelmäßige Verteilung von Spannung und Flankenkraft.

Ein gemäß dem Verfahren hergestelltes Gewinde 10 weist demgegenüber eine wesentlich gleichmäßigere Verteilung von Flankenkraft und Spannung auf. Der erste Gewindegang wird deutlich entlastet.

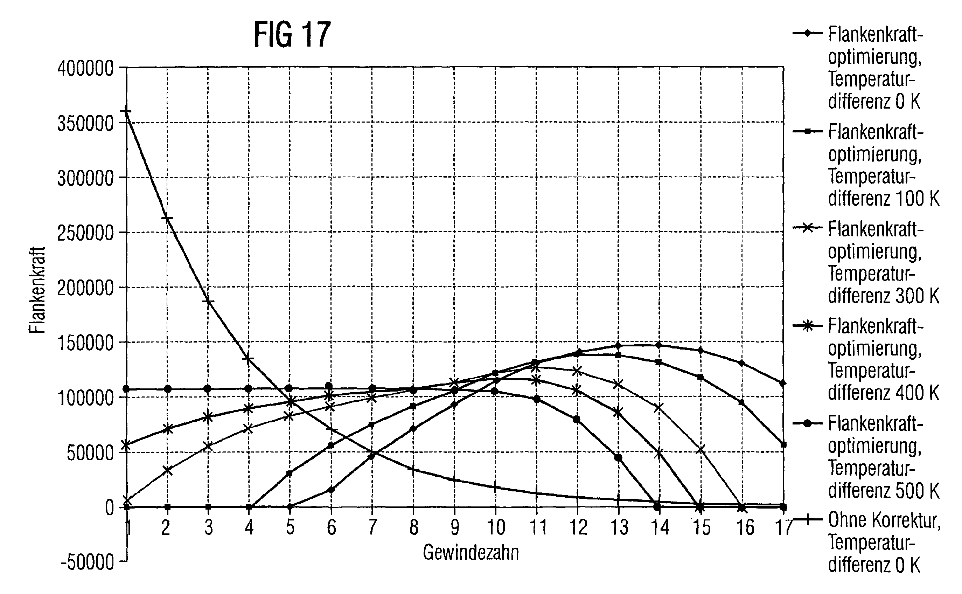

Figur 17 zeigt die Flankenkraft eines gemäß dem Verfahren ausgestalteten Gewindes 10 bei unterschiedlichen Temperaturen. Das Gewinde 10 ist auf einen Anwendungszustand mit einer Temperatur von etwa 500 °C ausgelegt und weist bei dieser Temperatur bis etwa zum zehnten Gewindegang eine praktisch gleichbleibende Belastung auf (Linie mit Vollkreisen). Auch bei anderen Temperaturen wird der erste Gewindegang zuverlässig entlastet. Die Belastung liegt hier erheblich unterhalb der Belastung, die bei einem konventionellen Gewinde auftritt.

Die Erfindung ermöglicht eine optimale Gestaltung von Gewinden 10 in Abhängigkeit vom jeweiligen Anwendungsfall. Die Belastungen entlang des Gewindes werden gleichmäßiger, und der stark gefährdete erste Gewindegang wird entlastet. Es ergeben sich somit wesentlich höher belastbare Gewinde 10. Aufwendige Versuche zur Bestimmung der optimale Gewindegestaltung sind nicht erforderlich. Weiter kann auf komplizierte konstruktive Maßnahmen verzichtet werden.

**Patentansprüche**

1. Verfahren zur Ermittlung einer optimierten Gestaltung eines Gewindes (10) mit zwei Verschraubungspartnern (11, 12) zur anwendungsbezogenen Optimierung der Tragfähigkeit mit folgenden Schritten:

   a) Vorgeben einer Gestaltung der Verschraubungspartner (11, 12) des Gewindes (10) im Ausgangszustand,
   b) Ermittlung der im Anwendungsfall auftretenden Belastungen,
   c) Bestimmung der unter den Belastungen des Anwendungsfall auftretenden Verformung eines oder beider Verschraubungspartner (11, 12),
   d) Ermitteln einer für den Anwendungsfall optimierten Gestaltung des Gewindes unter Berücksichtigung der auftretenden Verformung eines oder beider Verschraubungspartner.

2. Verfahren nach Anspruch 1,
   **dadurch gekennzeichnet, daß** zum Ermitteln der optimierten Gestaltung folgende Schritte erfolgen:

   d1) Definieren einer Korrekturfunktion ($s_{korr}$), die die im Anwendungsfall auftretende Verformung der Verschraubungspartner (11, 12) darstellt, und
   d2) Überlagern der vorgegebenen Gestaltung des Gewindes (10) mit der Korrekturfunktion ($S_{korr}$) zur Erzielung einer für den Anwendungsfall optimierten Gestaltung.

3. Verfahren nach Anspruch 1 oder 2,
   **dadurch gekennzeichnet, daß** die im
   Anwendungsfall auftretenden mechanischen Belastungen berücksichtigt werden.

4. Verfahren nach einem der Ansprüche 1 bis 3,
   **dadurch gekennzeichnet, daß** die im Betriebszustand auftretenden thermischen Belastungen berücksichtigt werden.

5. Verfahren nach einem der Ansprüche 1 bis 4,
   **dadurch gekennzeichnet, daß** eine im Anwendungsfall auftretende Querschnittsänderung zumindest eines der Verschraubungspartner (11, 12) berücksichtigt wird.

6. Verfahren nach einem der Ansprüche 1 bis 5,
   **dadurch gekennzeichnet, daß** mindestens zwei Tragbereiche (17, 18) vorgesehen werden.

7. Verfahren nach Anspruch 6,
   **dadurch gekennzeichnet, daß** ein erster Tragbereich (17) für den Einbaufall oder Vorspannungszustand der Verschraubungspartner (11, 12) des Gewindes (10) vorgesehen wird.

8. Verfahren nach Anspruch 6 oder 7 ,
   **dadurch gekennzeichnet, daß** ein zweiter Tragbereich (18) für den Betriebszustand der Verschraubungspartner (11, 12) des Gewindes (10) vorgesehen wird.

9. Verfahren nach Anspruch 8,
   **dadurch gekennzeichnet, daß** der Übergang (19) zwischen den beiden Tragbereichen (17, 18) derart definiert wird, daß die Korrekturfunktion ($S_{korr}$) an diesem Übergang (19) stetig ist.

10. Verfahren nach Anspruch 8 oder 9,
    **dadurch gekennzeichnet, daß** der Übergang (19) zwischen den beiden Tragbereichen (17, 18) derart definiert wird, daß die Korrekturfunktion ($S_{korr}$) an diesem Übergang (19) differenzierbar ist.

11. Verfahren nach einem der Ansprüche 8 bis 10,
    **dadurch gekennzeichnet, daß** zwischen den beiden Tragbereichen (17, 18) ein Übergangsbereich (20) definiert wird, der Tragaufgaben für beide Tragbereiche (17, 18) wahrnimmt.

12. Verfahren nach einem der Ansprüche 1 bis 11,
    **dadurch gekennzeichnet, daß** die Optimierung der Tragfähigkeit im Anwendungsfall durch eine Veränderung des Durchmessers (D) eines oder beider Verschraubungspartner (11, 12) erreicht wird.

13. Verfahren nach einem der Ansprüche 1 bis 12,
    **dadurch gekennzeichnet, daß** die Optimierung der Tragfähigkeit im Anwendungsfall durch eine Veränderung der Form der Zähne (15, 16) des Gewindes (10) eines oder beider Verschraubungspartner (11, 12) erreicht wird.

14. Verfahren nach einem der Ansprüche 1 bis 13,
    **dadurch gekennzeichnet, daß** die Optimierung der Tragfähigkeit im Anwendungsfall durch eine Veränderung der Teilung des Gewindes (10) eines oder beider Verschraubungspartner (11, 12) erreicht wird.

15. Verfahren nach einem der Ansprüche 1 bis 14,
    **dadurch gekennzeichnet, daß** die im Anwendungsfall auftretenden Verformung eines Verschraubungspartners (11), insbesondere die eines Schraubenbolzens, berücksichtigt wird und die Verformung des anderen Verschraubungspartners (12), insbesondere die einer Mutter, vernachlässigt wird.

EP 1 146 237 A1

## FIG 1

A → B → C → D → E

B1 B2

## FIG 2

$F + q \cdot dx$

11

q

dx

F

13

## FIG 3

10

11  13  12

$x$

$x$

$x = l_1$

F

18

17

$x_0$

$y$

$S_{korr}(x)$

14

# FIG 4

$S_{korr}(x)$

$x$

16

15

# FIG 5

$x_0$

16

15

# FIG 6

$\Delta r$

$S$

$60°\ (=\beta)$

## FIG 7

$S_{korr}(x)$

$x=l_1$

19

## FIG 8

$S_{korr}(x)$

$x=l_1$

19

## FIG 9

$S_{korr}(x)$

$x=l_1$

19

## FIG 10

$S_{korr}(x)$

20

$x=l_1$

19

$l_3$

## FIG 11A

10

15

22

16

22

21

11

12

## FIG 11B

10

15

22

16

22

21

11

23

24

12

EP 1 146 237 A1

# FIG 12A

25
23
24
15
22
16
18
20
17
21
11
23
24
12

# FIG 12B

23
24
15
22
16
21
11
23
24
12

18

# FIG 13A

# FIG 13B

# FIG 14A

# FIG 14B

FIG 15

Flankenkraft-optimierung, rein elastisch

Flankenkraft-optimierung, rein elastisch mit Randzonenkorrektur

Unkorrigiertes Gewinde, rein elastisch

Flankenkraft

Gewindezahn

EP 1 146 237 A1

FIG 16

Vergleichsspannung
für Flankenkraft-
optimierung,
rein elastisch

Vergleichsspannung
für Flankenkraft-
optimierung,
rein elastisch mit
Randzonenkorrektur

Vergleichsspannung
für unkorrigiertes
Gewinde,
rein elastisch

EP 1 146 237 A1

## FIG 17

EP 1 146 237 A1

Legend:
- Flankenkraft-optimierung, Temperatur-differenz 0 K
- Flankenkraft-optimierung, Temperatur-differenz 100 K
- Flankenkraft-optimierung, Temperatur-differenz 300 K
- Flankenkraft-optimierung, Temperatur-differenz 400 K
- Flankenkraft-optimierung, Temperatur-differenz 500 K
- Ohne Korrektur, Temperatur-differenz 0 K

Y-axis: Flankenkraft (400000, 350000, 300000, 250000, 200000, 150000, 100000, 50000, 0, -50000)

X-axis: Gewindezahl (1 2 3 4 5 6 7 8 9 10 11 12 13 14 15 16 17)

| Europäisches Patentamt | **EUROPÄISCHER RECHERCHENBERICHT** | Nummer der Anmeldung EP 00 10 7884 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 00 00750 A (HAJE DETLEF ;WIEGHARDT KAI (DE); SIEMENS AG (DE)) 6. Januar 2000 (2000-01-06) * Seite 2, Zeile 24 - Seite 3, Zeile 5 * * Seite 3, Zeile 24 - Zeile 31 * * Seite 13, Zeile 36 - Seite 17, Zeile 17; Abbildungen 1-5B * | 1-8, 12-15 | F16B33/02 |
| X | FR 2 609 757 A (CHAUFFOUR JEAN CLAUDE) 22. Juli 1988 (1988-07-22) * Seite 1, Zeile 28 - Seite 3, Zeile 4 * * Zusammenfassung * | 1-4 | |

**RECHERCHIERTE SACHGEBIETE (Int.Cl.7)**

F16B

Der vorliegende Recherchenbericht wurde für alle Patentansprüche erstellt

| Recherchenort | Abschlußdatum der Recherche | Prüfer |
|---|---|---|
| DEN HAAG | 13. September 2000 | Martin, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 10 7884

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2000

| Im Recherchenbericht angeführtes Patentdokument | Datum der Veröffentlichung | Mitglied(er) der Patentfamilie | Datum der Veröffentlichung |
|---|---|---|---|
| WO 0000750 A | 06-01-2000 | KEINE | |
| FR 2609757 A | 22-07-1988 | KEINE | |

EPO FORM P0461

Für nähere Einzelheiten zu diesem Anhang : siehe Amtsblatt des Europäischen Patentamts, Nr.12/82